# EUROPEAN PATENT APPLICATION

(11) **EP 2 128 241 A1**
(43) Date of publication of application: **02.12.2009**
(21) Application number: 08741786.1
(22) Date of filing: 20.02.2008
(51) Int. Cl.: C12H 1/07, C12H 1/04, B01D 35/02, B01D 35/16

(54) **DEVICE FOR TREATING AND PURIFYING A LIQUID PRODUCT**

(30) Priority: 09.03.2007 RU 2007108677
(71) Applicant: Obschestvo S Ogranichennoi Otvetstvennostiyu "Eurostandart", Moscow 107-497 (RU)
(72) Inventor: KISTEREV, Valeriy Evgenyevich, Moscow, 105264 (RU); ZHERDEV, Pavel Dmitrievich, Mytischi Moskovskaya obl., 141021 (RU)
(74) Representative: Sonn & Partner Patentanwälte
(86) International application number: PCT/RU2008/000093
(87) International publication number: WO 2008/111874

(57) **Abstract**

The invention substantially relates to the distillery industry. Said invention makes it possible to increase the vodka purification efficiency by that each portion of vodka poured from a bottle being treated and purified prior to the consumption thereof by a consumer and by that the treatment and purification are carried out so far as the vodka is consumed after being pushed out from the bottle by means of a small-sized centrifugal electric pump through a mixture of sorbing components inserted between filter materials directly into a drinking vessel.

## Description

The invention is related to the food industry, in particular to the distillery industry. The invention is intended for individual treatment and purification of each portion of vodka poured from a bottle of vodka prior to the consumption thereof by the consumer.

There exists a device for treating and purifying liquid products (see US patent Nº6193886 dated 27.02.2001), which contains a body connectable with the neck of the bottle, a filter located therein and a device to supply the liquid product from the bottle.

The imperfection of the existing device is the low efficiency of the filter used, caused by the supply of the liquid product of different levels of purification to it and by the impossibility to use bottles with rigid body. Besides, manual squeezing of the product is uncomfortable in the process of pouring the product from the bottle.

The technical result intended to be achieved by the invention is the elimination of the said imperfection, i.e. by creation of a comfortable in use mechanism ensuring the required pressure of the product inside the internal volume of a package for it to be pushed through the sorbent and filtering materials, with technical parameters required for the efficient treatment and purification of the product and ensuring a speed of its pouring from the bottle during its pouring into the drinking vessels, to which the consumer is used; creation of a control unit and indication of operation of the device to ensure its easy use during the consumption of the liquid product and to save battery resource; creation of an automated switch of the centrifugal pump of the device for treatment and purification of a liquid product which turns on automatically on turning the bottle neck down to pour the product into drinking vessels, and turns off automatically on its return to the initial state to ensure comfort of the consumer and battery resource saving.

The said result is achieved by the device for treating and purifying a liquid product, containing a body connectable with the neck of the bottle, a filter located therein, and means to supply liquid product from the bottle, where the filter is fixed on the internal surface of the body and the said device includes a pump with electric drive and a filter passing through the filter and air feeder implemented in the body to supply air into the bottle. The control circuit may contain an on/off switch located on the bottle or the body of the device and a gravitational switch inside the body. The gravitational switch may be a magnetically operated sealed switch and a moving magnet or two contacts and a moving element to close them, and the battery of the electric drive is located on the bottle or is fixed inside the body. The control circuit to indicate the drive's operation may contain an on/off indicator located on the bottle or the body, the pump may be implemented in form of an impeller connected with an electric drive, located at the exit from the encapsulating element located in the neck of the bottle or inside the element itself. The filter to improve the quality of purification and treatment is formed by the sequentially placed rough filtering material, sorbent or a mixture thereof and a fine filtering material. The connection of the body with the neck of the bottle is made with a fixation device. The device is equipped with a decorative pilfer-proof cap which is attachable to the body by means of a screw thread.

The essence of the invention is illustrated by the drawings.
Figure 1 shows the layout of the device for purifying and treating vodka, in which the electric drive switch and the battery are located on the bottle.
Figure 2 shows a version of the device in which the electric drive switch is located on the bottle, while the battery is inside the body.
Figure 3 shows a version of the device in which the battery is located inside the body, and the on/off switch is located on the body of the device, besides there is added a gravitational switch of the electric drive of the device in form of a magnetically operated sealed switch with a magnet.
Figure 4 shows a version of the device in which the battery is located inside the body, the on/off switch is located on the body and the automatic gravitational switch of the device is implemented in form of a group of contacts closed by a metal ball.

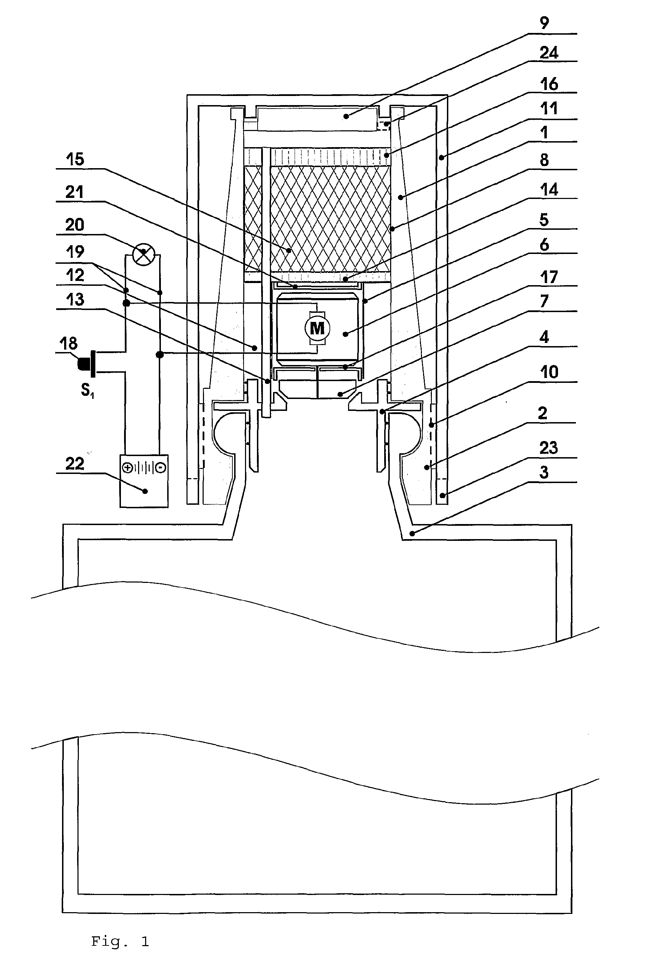

The first version of implementation of the device is shown in the figure 1.

The device contains four principal elements:
- a body 1, made of plastic with a lock 2 for connection to the neck 3 of a bottle, a cavity to place an encapsulating element 4, a body 5 for an electric drive 6, an impeller 7 of an electric pump, a filter 8, a spreader of restraint 9 and a threaded joint 10 on the external side of the body for screwing on a decorative sealing cap 11, as well as vodka ducts 12 constructively integrated in it, reverse air feeder 13 and other construction elements which provide for mounting, insulation and encapsulation of the device.
- the filter 8, which contains the sequentially allocated rough filtering material 14, sorbent 15, or a mixture of sorbents, and the fine filtering material 16.
- a mechanism of ensuring the required pressure of vodka for its pushing through the filter, which contains the body 5 for the electric drive, the electric drive 6, the impeller 7, an encapsulating seal 17 and the other constructive elements which provide for its mounting, insulation and encapsulation, as well as a battery located outside the device.
- an assembly for control and indication of the operation of the device, containing a switch 18, located outside the device and in a place comfortable for the consumer on the bottle of vodka, an electroconductive connection 19 and an on/off indicator 20.

The operation of the device for purification and treatment of each portion of bottled vodka prior to its consumption, depicted on the drawing 1 is as follows:

A sealed bottle of vodka is taken by the user in his hands, opened and depressurized by removing the decorative cup 11, which is screwed on the body 1 by means of a threaded connection 10, and is turned upside down over the drinking vessel. On unscrewing of the decorative cap 11, the detachment and destruction of the pilfer-proof cap 23 take place. The vodka contained in the bottle is poured through the orifice in the encapsulating element 4 into the body 1 to the impeller 7 of the electric pump. Through the ducts 12, vodka flows around the body 5 of the electric drive, reaches the rough filtering element 14, percolates through it into the sorbent 15, where it is treated, passes through the fine filtering material 16 and begins to percolate outside through the outgoing orifice 24 in the body 1 and the spreader of the restraint 9, being finally filtered by the fine filtering material to the required parameters. Because of the resistance of the assemblies and elements of the device and the low pressure formed inside the vodka container, compared to the outside pressure, the vodka cannot be poured out of the bottle in the required amounts and with a comfortable speed. To make it possible, the consumer, by means of the switch 18 comfortably located on the bottle of vodka, turns the electric drive 6 on, which spins the impeller 7, rigidly mounted on its shaft, as well as the operational indicator 20, which signals to the consumer that the device is operational. The electric drive is protected from vodka by the body 5 in which it is located, the seal 21 and the encapsulating seal 17. The spinning impeller creates pressure of the vodka required to overcome the resistance of the elements and assemblies of the device. As the result thereof, the vodka treated by sorbents from all impurities and purified by the filtering materials is poured from the bottle into the drinking vessel through the orifice 24 in the body 1.

When vodka is poured from the bottle, pressure inside the bottle decreases, which prevents its contents from pouring out. To compensate for such decrease of pressure, to decrease the load on the electric drive and to stabilize the pouring speed, the body 1 contains an air feeder 13, through which the air is let inside bottle when the decorative cap 11 is removed. Having filled the drinking vessel, the user turns the device off and turns the bottle back to a position with its neck up. The remaining vodka from above the filter and from the filter itself, by action of the gravity, gradually flows back into the bottle.

If required, the operation may be repeated.

On closing the device with the decorative cap 11, the internal cavity of the body 1 is encapsulated by its connection with the spreader of the restraint, the outgoing orifice 24 in the body 1 and the air feeder 13 are also closed and the vodka container is reliably sealed from the external medium.

The power of the electric pump is defined by the parameters of the filtering materials and properties of the sorbent mixture which are required to provide the necessary quality of treatment and filtration.

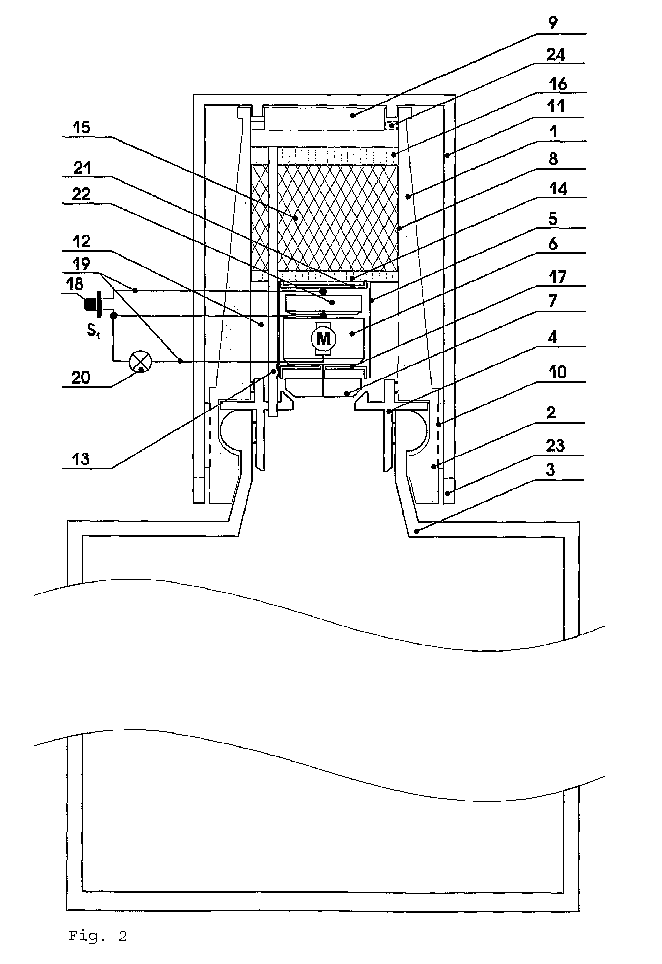

The second example of the device implementation is represented in the figure 2. It is distinguished by the battery element 22 being located inside the body 1 and insulated by the body 5. The operation of the second version of the device is analogous to that of the first one.

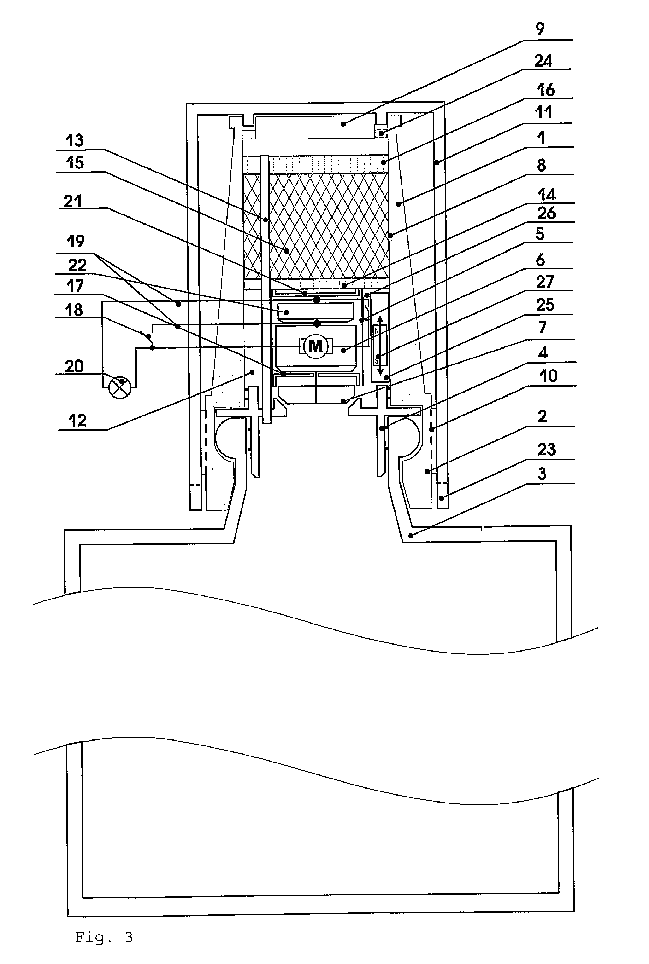

The third example of the device implementation is represented in the figure 3. It is distinguished by the device operation control and indication unit containing an automatic gravitational switch 25 of the electric drive, the switch 18 of the device, the electroconductive connections 19 and the device power on/off indicator.

The operation of the device is similar to that of the first two versions of the device, and is distinguished by the action of the automatic gravitational switch 25 of the electric device located in the body 1, and made in form of a magnetically operated sealed switch 26 with the magnet 27, which moves freely within the relevant cavity when the bottle is turned with its neck down. Thus, on turning the bottle upside down, the magnet, under the effect of the gravitational forces is displaced towards the firmly fixed magnetically operated sealed switch, affecting it with its magnetic field, and, as a result, the magnetically operated sealed switch's contacts are closed and the electric drive 6 of the pump is turned on, spinning the impeller 7 rigidly fixed on its shaft.

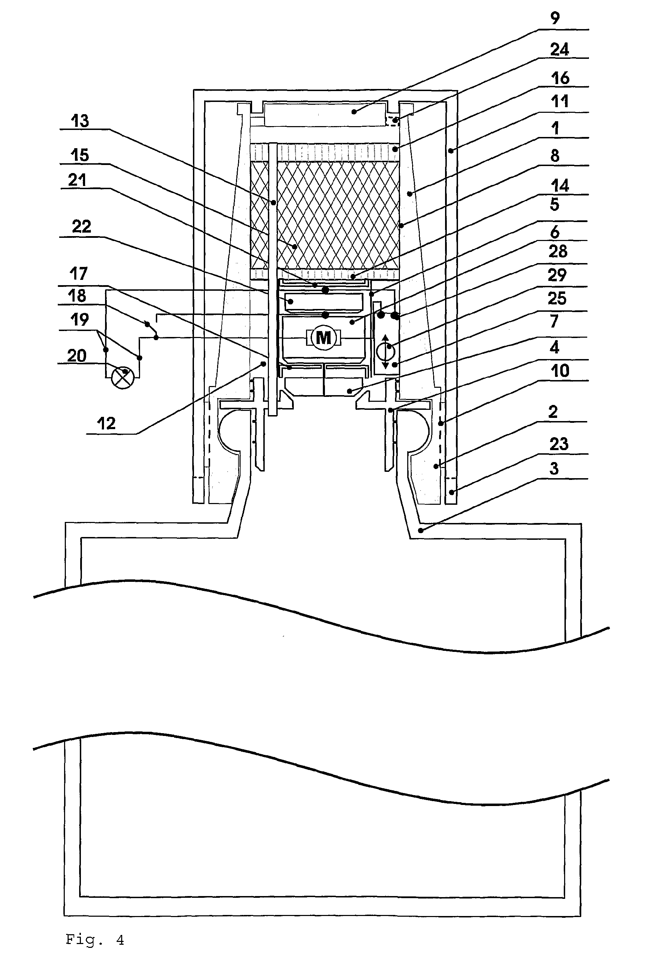

The fourth version of the device's implementation is shown in the figure 4. The distinction of this version is the implementation of the gravitational switch 25 in form of the contacts 28 of the electric drive switch and a metal ball 29. On turning the bottle with its neck down, the gravitational switch is enacted, the ball, under the effect of gravitational forces, is displaced towards the rigidly fixed contacts of the switch, closes them, turning the pump's electric drive on, which spins the impeller rigidly fixed on its shaft. Having filled the drinking vessel, the consumer turns the bottle neck up. The ball, under the effect of gravitational forces, falls down inside the internal cavity of the switch, the contacts of the switch are opened, and the electric drive stops. The vodka remaining above the filter and from the filter itself, by the effect of gravitational forces, gradually flows back into the bottle.

The operation is repeated if required.

Before sealing the device with the decorative cap, to save the battery resources, the on/off switch 18 of the device is turned off, the indicator 20 goes out. The decorative cap is screwed on the body 1, the outgoing orifice 24 in the body 1 and the air feeder 13 are closed and the vodka container is reliably encapsulated from the external medium.

Although the above shows only a few preferable versions of implementation of the invention, it is obvious that in accordance with the definition attached, there can also be other versions of implementation, corresponding to the volume of the present device.

## Claims

1. A device for treatment and purification of a liquid product, containing a body connectable with the neck of the bottle with an encapsulating element, a filter located therein, and means to supply the liquid product from the bottle, **characterized in that** the filter is fixed on the internal surface of the body, and the said device includes a pump connected to an electric drive with an electric motor by a control circuit and a battery element, as well as a feeder passing through the filter to supply air into the bottle.

2. The device according to claim 1, **characterized in that** the electric motor control circuit contains a switch located on the bottle or on the body.

3. The device according to claim 1, **characterized in that** the electric motor control circuit contains a switch located on the bottle or on the body and a gravitational switch of the electric drive of the electric pump, fixed inside the body.

4. The device according to claim 3, **characterized in that** the switch is made in form of a magnetically operated sealed switch and a moving magnet or in form of two contacts and a moving element closing them.

5. The devices according to any on of claims 2 to 4, **characterized in that** the power element of the electric drive is located on the bottle or fixed inside the body.

6. The device according to claim 1, **characterized in that** the control circuit contains a power indicator.

7. The devices according to any on of claims 1 to 4, **characterized in that** the electric pump contains an impeller located at the exit from the encapsulating element located in the neck of the bottle or inside the element itself.

8. The device according to claim 1, **characterized in that** the filter is formed of the sequentially placed rough filtering material, sorbent and fine filtering material.

9. The device according to claim 1, **characterized in that** there is a spreader implemented in the outgoing orifice of the body.

10. The device according to claim 1, **characterized in that** the body is connected to the neck of the bottle using a lock.

11. The device according to claim 1, **characterized in that** it has a decorative cap connected to the body.

12. The device according to claim 1, **characterized in that** the decorative cap is connected to the body by means of a screw thread with a pilfer-proof cap.

13. The device according to claim 1, **characterized in that** the body is connected to the neck of the bottle by means of a screw thread with a lock.

14. The device according to claim 1, **characterized in that** the air feeder is formed inside the body of the device.
